# EUROPEAN PATENT APPLICATION

(11) **EP 3 477 043 A1**
(43) Date of publication of application: **01.05.2019**
(21) Application number: 17198462.8
(22) Date of filing: 26.10.2017
(51) Int. Cl.: E21B 43/08, B01D 29/03, E21B 17/046

(54) **SEPARATING DEVICE AND USE OF A SEPARATING DEVICE**

(71) Applicant: 3M Innovative Properties Company, Saint Paul, MN 55133-3427 (US)
(72) Inventor: Lange, Dietrich, 87480 Weitnau (DE)
(74) Representative: Mössner, Brigitte

(57) **Abstract**

The present disclosure relates to a separating device for removing solid particles from fluids, and to the use of said separating device for removing solid particles from fluids, especially in extraction wells. The separating device comprising a tubular-shaped filter element (3) having an upper end and a lower end, a perforated pipe (1) which is co-centric with and located inside the filter element (3), an end cap (5, 6) at the upper end and an end cap at the lower end of the filter element (3), the end cap being co-centric with the perforated pipe (1),
wherein the end cap (5, 6) at the upper end and/or at the lower end of the filter element (3) is fixed on the perforated pipe (1) in axial direction in a form-fitting manner.

## Description

### Technical Field

The present disclosure relates to a separating device for the removal of solid particles from a fluid.

### Background

Such separating devices are required in many oil and gas extraction wells. Mineral oil and natural gas are stored in naturally occurring underground reservoirs, the oil or gas being distributed in more or less porous and permeable mineral layers. The aim of every oil or gas drill hole is to reach the reservoir and exploit it in such a way that, as far as possible, only saleable products such as oil and gas are extracted, while undesired by-products are minimized or even avoided completely. The undesired by-products in oil and gas extraction include solid particles such as sands and other mineral particles that are entrained from the reservoir up to the borehole by the liquid or gas flow.

Since the mineral sands are often abrasive, the influx of such solids into the production tubing and pump cause considerable undesired abrasive and erosive wear on all of the technical internals of the borehole. It is therefore endeavoured to free the production flow of undesired sands directly after it leaves the reservoir, that is to say while it is still in the borehole, by filter systems.

Problems of abrasion and erosion in the removal of solid particles from liquid and gas flows are not confined to the oil and gas industry, but may also occur in the extraction of water. Water may be extracted for the purpose of obtaining drinking water or else for the obtainment of geothermal energy. The porous, often loosely layered reservoirs of water have the tendency to introduce a considerable amount of abrasive particles into the material that is extracted. In these applications too, there is the need for abrasion- and erosion-resistant filters. Also in the extraction of ore and many other minerals, there are problems of abrasion and erosion in the removal of solid particles from liquid and gas flows.

In oil and gas extraction, the separation of undesired particles is usually achieved today by using filters that are produced by spirally winding and welding steel forming wires onto a perforated basepipe. Such filters are referred to as "wire wrap filters". Another commonly used type of construction for filters in oil and gas extraction is that of wrapping a perforated basepipe with metal screening meshes. These filters are referred to as "metal mesh screens". Both methods provide filters with effective screen apertures of 75 µm to 350 µm. Depending on the type of construction and the planned intended use of both these types of filter, the filtering elements are additionally protected from mechanical damage during transport and introduction into the borehole by an externally fitted, coarse-mesh cage. The disadvantage of these types of filter is that, under the effect of the abrasive particles flowing at high speed, metal structures are subject to rapid abrasive wear, which quickly leads to destruction of the filigree screen structures. Such high-speed abrasive flows often occur in oil and/or gas extraction wells, which leads to considerable technical and financial maintenance expenditure involved in changing the filters. There are even extraction wells which, for reasons of these flows, cannot be controlled by the conventional filtering technique, and therefore cannot be commercially exploited. Conventional metallic filters are subject to abrasive and erosive wear, since steels, even if they are hardened, are softer than the particles in the extraction wells, which sometimes contain quartz.

In order to counter the abrasive flows of sand with abrasion-resistant screen structures, US 2011/0220347 A1, US 8,833,447 B2, US 8,662,167 B2 and WO 2016/018821 A1 propose filter structures in which the filter gaps, that is to say the functional openings of the filter, are created by stacking specially formed densely sintered annular discs of a brittle-hard material, preferably of a ceramic material. In this case, at least three spacers are arranged on the upper side of annular discs, distributed uniformly over the circular circumference of the discs.

In WO 2016/018821 A1, end caps are provided at the upper and lower end of the stack of annular discs. The end caps are firmly connected to a perforated pipe which is located inside the annular stack and which is also called "basepipe". The end caps are fastened to the basepipe by means of welding. The end caps serve the purpose of fixing the annular discs on the basepipe. It is required that the end caps cannot be displaced on the basepipe in axial direction. As welding is deleterious for the corrosion behavior of the metals and alloys from which the basepipe and the end caps are made, welding is not acceptable in applications with demanding corrosion problems.

Therefore, there is still a need to provide an improved separating device for the removal of solid particles from fluids, in particular from oil, gas and water. Particularly, there is a need to provide a separating device having end caps which are fixed on the basepipe without the need of welding.

As used herein, "a", "an", "the", "at least one" and "one or more" are used interchangeably. The term "comprise" shall include also the terms "consist essentially of" and "consists of".

### Summary

In a first aspect, the present disclosure relates to a separating device for removing solid particles from fluids, comprising
a tubular-shaped filter element having an upper end and a lower end,
a perforated pipe which is co-centric with and located inside the filter element,
an end cap at the upper end and an end cap at the lower end of the filter element, the end cap being co-centric with the perforated pipe,
wherein the end cap at the upper end and/or at the lower end of the filter element is fixed in axial direction in a form-fitting manner.

In another aspect, the present disclosure relates to a kit of parts for assembling the separating device disclosed herein, wherein the kit of parts comprises a tubular-shaped filter element, a perforated pipe, an end cap and a fastening element, and wherein the perforated pipe has a notch at the outer circumference of the upper end of the perforated pipe and/or a notch at the outer circumference of the lower end of the perforated pipe.

In yet a further aspect, the present disclosure also relates to the use of a fastening element as disclosed herein for fixing an end cap on a perforated pipe in axial direction in a form-fitting manner.

In yet a further aspect, the present disclosure also relates to the use of the separating device disclosed herein for removing solid particles from fluids
in a process for extracting fluids from extraction wells, or
in water or in storage installations for fluids, or
in a process for extracting ores and minerals.

The separating device of the present disclosure has an end cap which is fixed on the perforated pipe without the need of welding. The end cap is fixed on the perforated pipe in a form-fitting manner. The end cap does not need to be fixed by a force-locking connection such as clamping or by a substance-to-substance bonding such as welding. The separating device of the present disclosure can be used in applications with demanding corrosion problems, as no welding processes are needed for the assembly of the separating device.

The end cap is fixed reliable and durable on the perforated pipe with respect to the exact position. The end cap cannot be displaced in an axial direction on the perforated pipe. The end cap can withstand a push-off force of several metric tons in both axial directions, depending on the diameter of the perforated pipe and the filter element. For example, for a perforated pipe having an outer diameter of 5 inches, the end cap of the separating device of the present disclosure can carry an axial load of at least 60 metric tons without plastic deformation or axial displacement.

### Brief description of the drawings

The present disclosure is explained in more detail on the basis of the drawings, in which
Figure 1 schematically shows the overall view of a separating device as disclosed herein;
Figure 2 shows a cross-sectional view of a separating device as disclosed herein;
Figure 3 shows a detail of the cross-sectional view of Figure 2;
Figures 4 to 7 respectively show a detail of a cross-sectional view of a separating device as disclosed herein;
Figure 8 schematically shows the overall view of a separating device as disclosed herein;
Figure 9 shows a cross-sectional view of a separating device as disclosed herein;
Figure 10 shows a detail of the cross-sectional view of Figure 9;
Figures 11A - 11C show various views of a first embodiment of a fastening element as disclosed herein;
Figures 12A - 12C show various views of a second embodiment of a fastening element as disclosed herein;
Figures 13A - 13C show various views of a third embodiment of a fastening element as disclosed herein; and
Figures 14A - 14B show various views of a fourth embodiment of a fastening element as disclosed herein.

### Detailed Description

Preferred embodiments and details of the separating device of the present disclosure are explained in more detail below with reference to the drawings.

Various embodiments of the separating device according to the present disclosure are described below.

The separating device may comprise the described basic elements that are designed appropriately for the materials and made to match one another.

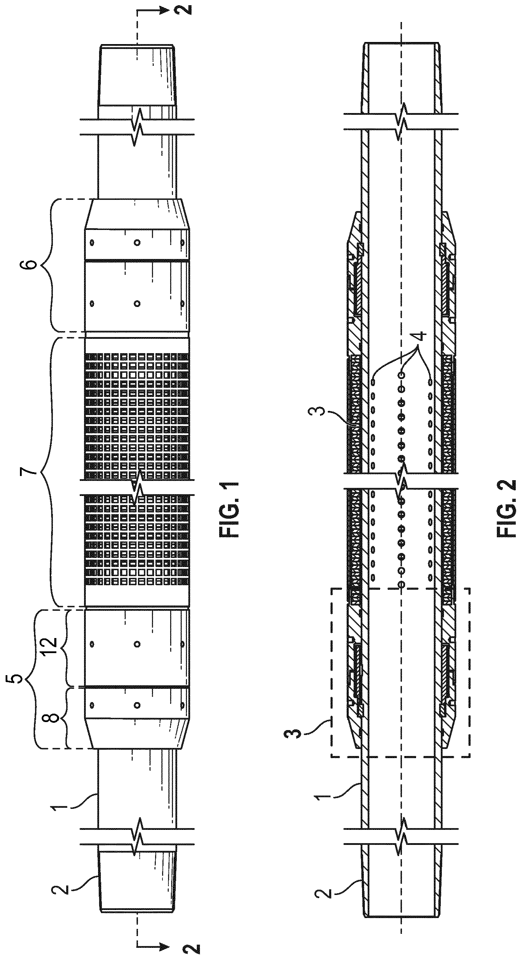

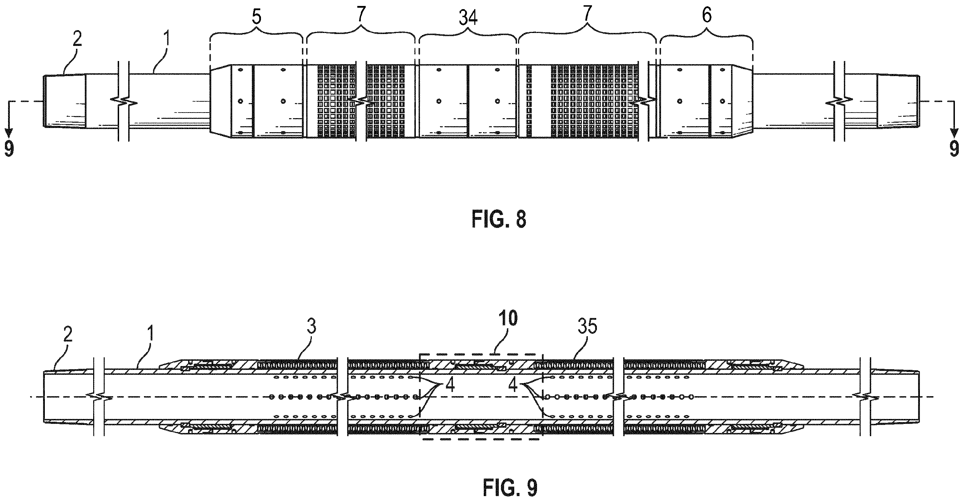

The separating device may contain a tubular-shaped filter element 3 (see Figures 1 and 8) having an upper end and a lower end. The tubular-shaped filter element may be a conventional filter element such as a wire wrap filter or a metal mesh screen or any other suitable type of filter. The filter element may also comprise a concentric stack of at least three annular discs, the annular discs having spacers on their upper side or underside defining a separating gap between two individual annular discs.

The separating device may comprise a perforated pipe 1 which is located inside the filter element 3, 36 (see Figures 1, 2, 8 and 9). The perforated pipe 1 is co-centric with the filter element 3, 36. The perforated pipe 1 located inside the filter element 3, 36 is also referred to hereinafter as the basepipe.

The basepipe is perforated, i.e. provided with holes, in the region of the filter element; it is not perforated outside the region of the filter element. The perforation 4 serves the purpose of directing the filtered fluid, i.e. the fluid flow freed of the solid particles, such as for example gas, oil or mixtures thereof, into the interior of the basepipe, from where it can be transported or pumped away.

Pipes such as those that are used in the oil and gas industry for metallic filters (wire wrap filter, metal mesh screen) may be used as the basepipe. The perforation is provided in accordance with patterns customary in the industry, for example 30 holes with a diameter of 9.52 mm may be introduced over a basepipe length of 0.3048 m (corresponding to 1 foot).

Threads 2 are usually cut at both ends of the basepipe 1 and can be used for screwing the basepipes together into long strings.

The basepipe may consist of a metallic material such as steel, for example steel L80. Steel L80 refers to steel that has a yield strength of 80 000 psi (corresponding to about 550 MPa). As an alternative to steel L80, steels that are referred to in the oil and gas industry as J55, N80, C90, T95, P110 and L80Cr13 (see Drilling Data Handbook, 8th Edition, IFP Publications, Editions Technip, Paris, France) may also be used. Other steels, in particular corrosion-resistant alloy and high-alloy steels, may also be used as the material for the basepipe. For special applications in corrosive conditions, basepipes of nickel-based alloys may also be used. It is also possible to use aluminium materials as the material for the basepipe, in order to save weight. Furthermore, basepipes of titanium or titanium alloys may also be used.

The outside diameter of the basepipe is typically from 1 inch to 10 inches.

The separating device may contain an end cap 5 at the upper end and an end cap 6 at the lower end of the filter element (see Figures 1 and 8). The end caps are co-centric with the basepipe, The end caps are fixing the filter element on the basepipe.

For better understanding, and since the separating device according to the present disclosure is generally introduced into an extraction borehole in vertical alignment, the terms "upper" and "lower" are used here, but the separating device may also be positioned in horizontal orientation in the extraction borehole (in which case, upper typically would refer to the most upstream portion and lower would refer to the most downstream portion of the separating device, when in service).

The end caps are produced from metal and usually from steel. The end caps may be produced from the same material as the basepipe.

During assembly, the end caps are pushed onto the basepipe after the filter element and are subsequently fastened on the basepipe. The end caps are fixed on the basepipe in axial direction in a form-fitting manner.

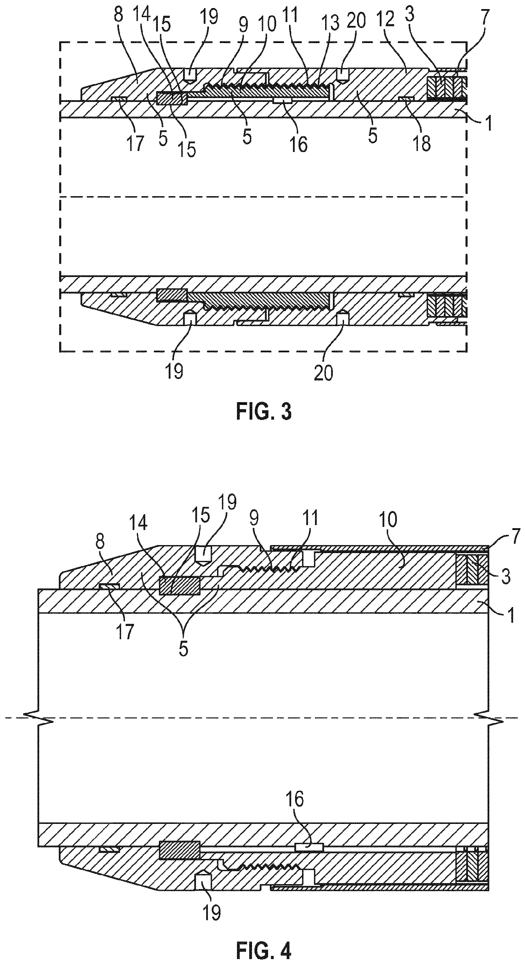

In some embodiments of the separating device disclosed herein, the separating device further comprises a fastening element 14, 23, 28, 32 (see Figures 3, 4, 5, 6 and 7) which is co-centric with the perforated pipe 1. The fastening element is used for fixing the end cap 5, 6 at the upper end and/or at the lower end of the filter element on the basepipe in axial direction in a form-fitting manner. The outer diameter of the fastening element is larger than the outer diameter of the basepipe. At the outer circumference of the basepipe, there may be a notch 15, 29, 31 (see Figures 3, 4, 5, 6 and 7) at the upper end of the basepipe or at the lower end of the basepipe or at the upper and lower end of the basepipe. The fastening element 14, 23, 28, 32 may be inserted into the notch at the upper end of the basepipe or at the lower end of the basepipe or at the upper and lower end of the basepipe. The end cap 5, 6 is fixed on the basepipe 1 in axial direction by the fastening element, at the upper end or at the lower end or at the upper and lower end of the filter element. The end cap 5, 6 is fixed on the basepipe 1 in axial direction in a form-fitting manner by the fastening element, at the upper end or at the lower end or at the upper and lower end of the filter element.

The ground of the notch 15, 29 may be even, i.e. unruffled, or profiled. If the ground of the notch is profiled, then the inner circumference of the fastening element is correspondingly profiled.

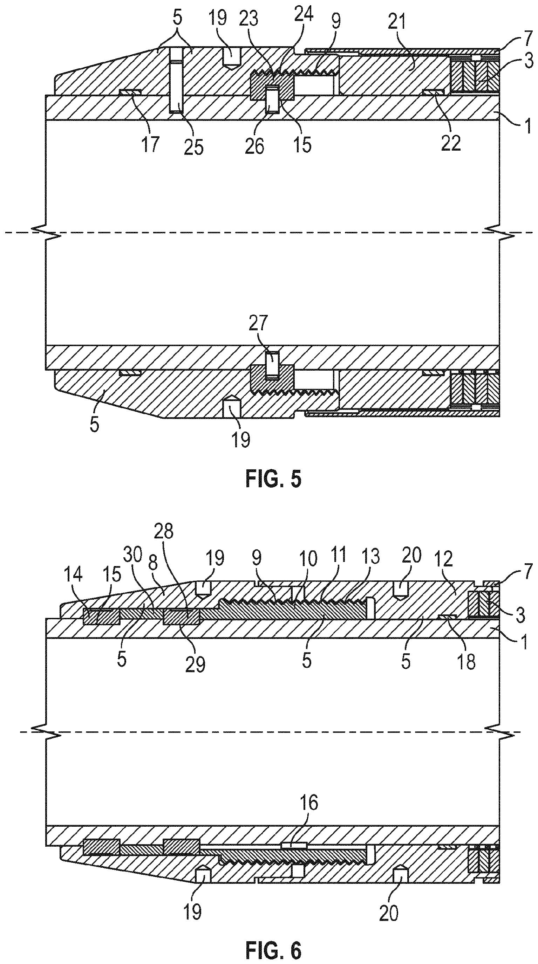

The end cap can be made from a single component, such as for example the end cap 5 in Figure 5, which is fixed by the fastening element 23, but it is also possible that the end cap is composed of more than one component. The end cap may comprise a first component 8 and a second component 10, such as for example shown in Figures 1, 3 and 4. The first and second component are both fixed by the fastening element 14 in axial direction on the basepipe. The end cap is fixed on the basepipe in axial direction in a form-fitting manner. The end cap is fixed firmly and reliably on the basepipe by the fastening element, the end cap cannot be moved or displaced in axial direction.

The fastening element may be produced from metal and usually from steel. The fastening element may be produced from a metal with high yield strength.

It is possible that a notch and a fastening element inserted into the notch are provided only at one end of the basepipe, i.e. only at the upper or lower end. By using a notch and a fastening element for fixing the end cap, the end cap can be removed, for example for repairing or replacing the filter element. On the other end of the basepipe, the end cap can be either firmly fixed, for example by welding, or the end cap may also be fixed by a notch and a fastening element.

A notch 43 and a fastening element 42 inserted into the notch may also be provided for an intermediate part 34 in a middle region of the basepipe (see Figures 8 - 10). Such an intermediate part is used for a separating device having two or more filter modules on one basepipe and is described below in more detail.

The fastening element may be a segmented ring. For example, the fastening element may be a ring composed of two, three or four or more segments.

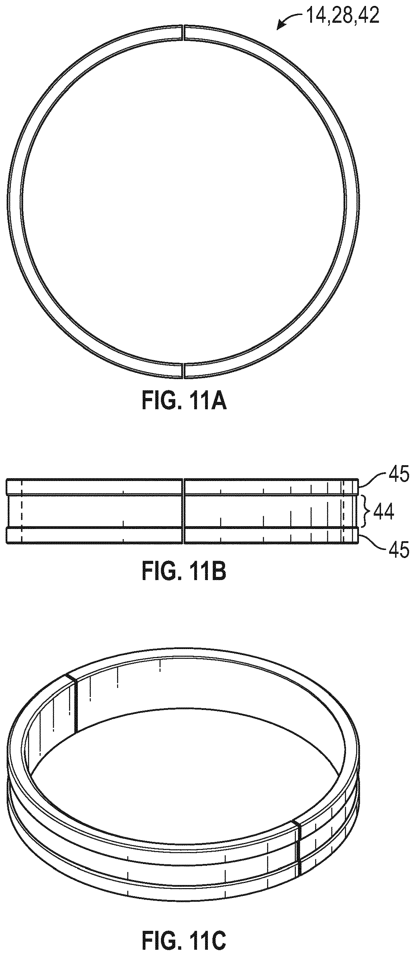

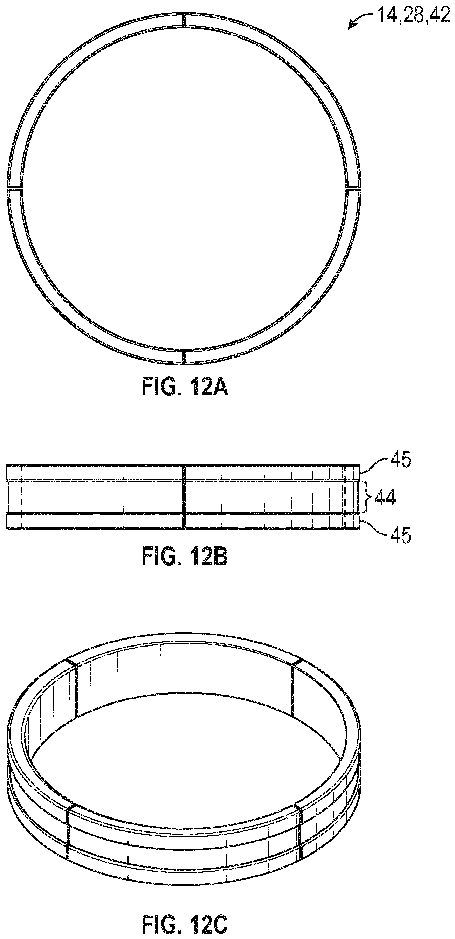

Figures 11A - 11C show a first embodiment of a fastening element 14, 28, 42 which is a segmented ring composed of two segments. Figure 11A shows a plan view from the top, Figure 11B shows a plan view from the side and Figure 11C shows a 3D view. Figures 12A - 12C show a second embodiment of a fastening element 14, 28, 42 which is a segmented ring composed of four segments. Figure 12A shows a plan view from the top, Figure 12B shows a plan view from the side and Figure 12C shows a 3D view. The outer diameter of the segmented ring may by smaller in the central region 44 than in the regions at the end 45. After the segmented ring has been inserted in the notch 15, 29, a flexible tape may be placed around the central region 44 for temporarily fixing the segmented ring on the basepipe before the end cap is assembled on the basepipe and pushed over the fastening element.

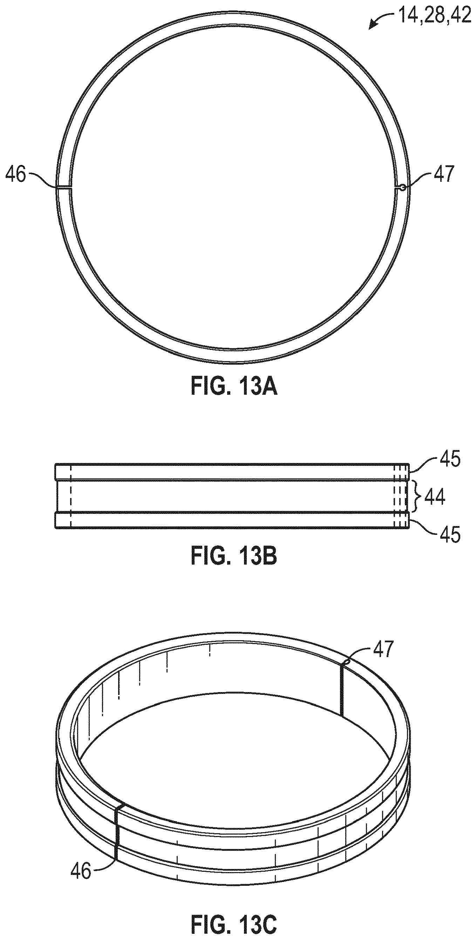

The fastening element may also be a slotted ring. Figures 13A - 13C show a third embodiment of a fastening element 14, 28, 42 which is a slotted ring. Figure 13A shows a plan view from the top, Figure 13B shows a plan view from the side and Figure 13 C shows a 3D view. At one position of the circumference of the ring, the ring has a slot 46. At another position of the circumference of the ring opposite to the slot, there is a groove or opening 47 which permits that the ring is bent elastically apart, so that it can be placed around the basepipe and inserted into the notch 15, 29, 43.

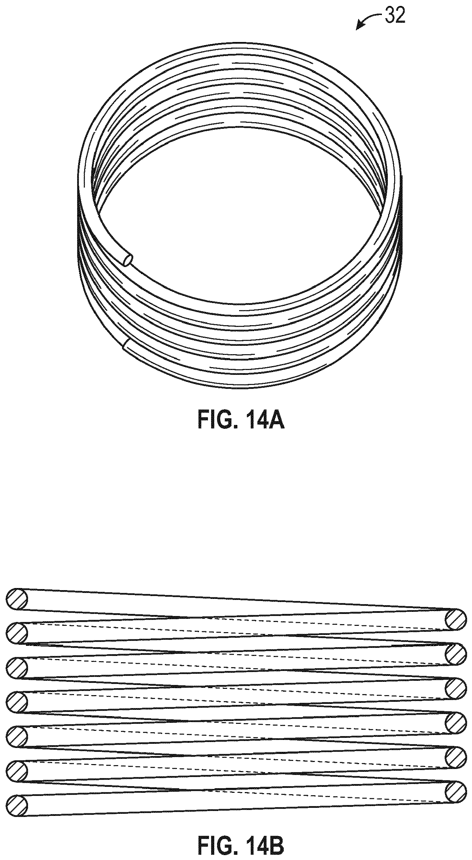

The fastening element may also be a spirally shaped element. Figures 14A - 14B show a fourth embodiment of a fastening element which is a spirally shaped element 32. Figure 14A shows a cross-sectional view, Figure 14B shows a 3D view. In this case, the notch at the outer circumference of the basepipe is also spirally shaped.

Some embodiments and further details of the separating device of the present disclosure are explained in more detail below with reference to the drawings.

Figures 1 to 3 show a separating device of the present disclosure according to a first embodiment. Figure 1 schematically shows the overall view and Figure 2 shows the cross-sectional view. Figure 3 shows a detail of the cross-sectional view of Figure 2 representing the upper or lower end of the separating device.

The separating device comprises a tubular-shaped filter element 3 (see Figure 2). The tubular-shaped filter element of this embodiment is a concentric stack of at least three annular discs. The stack of annular discs may comprise for example 80 annular discs. The annular discs have spacers on their upper side or underside defining a separating gap between two individual annular discs.

The separating device comprises a basepipe 1 which is located inside the filter element 3 (see Figures 1 and 2). The basepipe 1 is co-centric with the filter element 3. The basepipe is the mechanically supporting structure of the separating device.

The basepipe is perforated, i.e. provided with holes, in the region of the filter element; it is not perforated outside the region of the filter element. The perforation 4 serves the purpose of directing the filtered fluid, i.e. the fluid flow freed of the solid particles, such as for example gas, oil or mixtures thereof, into the interior of the basepipe, from where it can be transported or pumped away.

In this embodiment, the end cap 5, 6 is composed of three components. The end cap comprises a first component 8 (see Figures 1 and 3) having a thread 9 at an inner circumference. The end cap further comprises a second component 10 having a thread 11 at the outer circumference. The end cap further comprises a third component 12 having a thread 13 at an inner circumference. The fastening element 14 is inserted into the notch 15 which is provided at the outer circumference at the upper and/or lower end of the basepipe 1. The notch can be machined by turning, milling or grinding. The fastening element 14 may be a segmented ring, for example such as shown in Figures 11A - 11C or 12A - 12C, or a slotted ring, for example such as shown in Figures 13A - 13C. During assembly, the second component 10 of the end cap is screwed into the thread 9 of the first component 8 of the end cap. The first and second component are screwed against the stop which is given by the fastening element 14. By screwing the first and second component of the end cap against the stop which is given by the fastening element, the end cap is fixed in axial direction by the fastening element, i.e. the end cap cannot be displaced in an axial direction.

The third component 12 of the end cap is screwed onto the thread 11 of the second component 10. The third component 12 does not have to be screwed until a stop and is adjustable in axial direction by screwing the third component 12 onto the thread 11 of the second component 10. The third component 12 may serve for connecting the end cap with the further components of the separating device such as the filter element 3. The third component 12 may serve for applying a pre-load onto the filter element. By screwing the third component onto the thread of the second component, the third component can be adjusted in axial direction.

A means for protection against twisting may be used for the second component 10 of the end cap, for example a feather key 16. The feather key is inserted into a key groove provided at one position of the outer circumference of the basepipe. For assembly of the first 8 and third component 12 of the end cap, a mounting tape 17, 18 may be used, such as a PTFE tape. Bores 19, 20 may be provided for assembly of the first 8 and second component 12 of the end cap on the basepipe, at some positions at the outer circumference of the first 8 and second component 12. The bores 19, 20 may be used for a fastening tool such as a hook spanner.

Figures 4 to 7 show details of the cross-sectional view of separating devices of the present disclosure according to further embodiments, representing the upper or lower end of the separating device.

Figure 4 shows a detail of the cross-sectional view of a separating device of the present disclosure according to a second embodiment, representing the upper or lower end of the separating device. In this embodiment, the end cap 5 is composed of two components. The end cap comprises a first component 8 having a thread 9 at an inner circumference. The end cap further comprises a second component 10 having a thread 11 at an outer circumference. The fastening element 14 is inserted into the notch 15 which is provided at the outer circumference at the upper and/or lower end of the basepipe 1. The fastening element 14 may be a segmented ring, for example such as shown in Figures 11A - 11C or 12A - 12C, or a slotted ring, for example such as shown in Figures 13A - 13C. During assembly, the second component 10 of the end cap is screwed into the thread 9 of the first component 8 of the end cap. The first and second component are screwed against the stop which is given by the fastening element 14. By screwing the first and second component of the end cap against the stop which is given by the fastening element, the end cap is fixed in axial direction by the fastening element, i.e. the end cap cannot be displaced in an axial direction.

The second component 10 of the end cap connects the end cap with the further components of the separating device such as the filter element 3.

A means for protection against twisting may be used for the second component 10 of the end cap, for example a feather key 16. The feather key is inserted into a key groove provided at one position of the outer circumference of the basepipe. For assembly of the first component 8 of the end cap, a mounting tape 17 may be used, such as a PTFE tape. Bores 19 may be provided for assembly of the first component 8 of the end cap on the basepipe, at some positions at the outer circumference of the first component 8. The bores 19 may be used for a fastening tool such as a hook spanner.

Figure 5 shows a detail of the cross-sectional view of a separating device of the present disclosure according to a third embodiment, representing the upper or lower end of the separating device. In this embodiment, the end cap 5 is composed of one single component. The end cap 5 is provided with a thread 9 at an inner circumference. The fastening element 23, which may be a segmented ring and specifically a ring composed of two segments, is provided with a thread 24 at the outer circumference. The fastening element 23 is inserted into the notch 15 which is provided at the outer circumference at the upper and/or lower end of the basepipe 1. During assembly, the end cap 5 is screwed onto the fastening element 23 until the stop which is given by the fastening element 23. By screwing the end cap 5 until the stop which is given by the fastening element 23, the end cap 5 is fixed in axial direction by the fastening element 23, i.e. the end cap 5 cannot be displaced in an axial direction.

The separating device of Figure 5 may further comprise a coupling-on-element 21 for connecting the end cap 5 with the further components of the separating device such as the filter element 3.

A means for protection against twisting may be used for the end cap 5 and for the fastening element 23, for example an anti-torque pin 25, 26, 27. The anti-torque pin is inserted into a bore provided at one position of the outer circumference of the basepipe. For assembly of the end cap 5, and also of the coupling-on-element 21, a mounting tape 17, 22 may be used, such as a PTFE tape. A bore 19 may be provided for assembly of the end cap 5 on the basepipe, at some positions at the outer circumference of the end cap 5. The bore 19 may be used for a fastening tool such as a hook spanner.

Figure 6 shows a detail of the cross-sectional view of a separating device of the present disclosure according to a fourth embodiment, representing the upper or lower end of the separating device. In this embodiment, there are two fastening elements 14, 28 provided for fixing the end cap. The end cap 5 is composed of three components. The end cap 5 comprises a first component 8 having a thread 9 at an inner circumference. The end cap further comprises a second component 10 having a thread 11 at the outer circumference. The end cap further comprises a third component 12 having a thread 13 at an inner circumference. Two fastening elements 14, 28 are inserted into the notches 15, 29 which are provided at the outer circumference at the upper and/or lower end of the basepipe 1. The fastening elements 14, 28 may be a segmented ring, for example such as shown in Figures 11A - 11C or 12A - 12C, or a slotted ring, for example such as shown in Figures 13A - 13C. A spacer ring 30 is placed between the two fastening elements. The spacer ring may be a metallic ring, for example made from steel. During assembly, the second component 10 of the end cap is screwed into the thread 9 of the first component 8 of the end cap. The first component 8 is screwed against the stop which is given by the fastening element 14, the second component 10 is screwed against the stop which is given by the fastening element 28. By screwing the first and second component of the end cap against the stop which is given by the fastening elements 14 and 28, the end cap is fixed in axial direction by the fastening elements, i.e. the end cap cannot be displaced in an axial direction. By using two fastening elements 14, 28 for this embodiment, higher push-off forces for the end cap can be achieved.

The third component 12 of the end cap is screwed onto the thread 11 of the second component 10. The third component 12 does not have to be screwed until a stop and is adjustable or movable in axial direction by screwing the third component 12 onto the thread 11 of the second component 10. The third component 12 may serve for connecting the end cap with the further components of the separating device such as the filter element 3. The third component 12 may serve for applying a pre-load onto the filter element. By screwing the third component onto the thread of the second component, the third component can be adjusted in axial direction.

A means for protection against twisting may be used for the second component 10 of the end cap, for example a feather key 16. The feather key is inserted into a key groove provided at one position of the outer circumference of the basepipe 1. For assembly of the third component 12 of the end cap, a mounting tape 18 may be used, such as a PTFE tape. Bores 19, 20 may be provided for assembly of the first 8 and second component 12 of the end cap on the basepipe, at some positions at the outer circumference of the first 8 and second component 12. The bores 19, 20 may be used for a fastening tool such as a hook spanner.

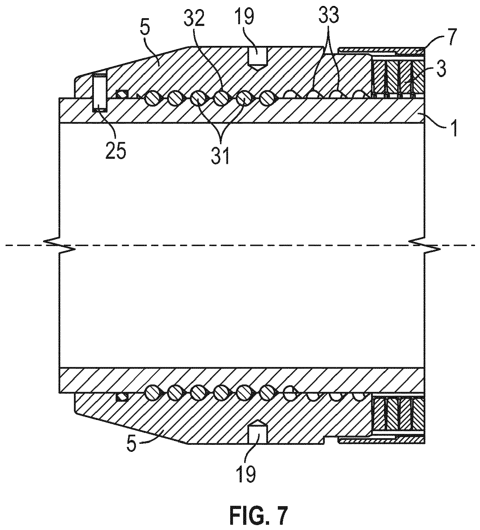

Figure 7 shows a detail of the cross-sectional view of a separating device of the present disclosure according to a fifth embodiment, representing the upper or lower end of the separating device. In this embodiment, the fastening element is a spirally shaped element such as shown in Figures 14A - 14B. The notch 31 which is provided at the outer circumference at the upper and/or lower end of the basepipe 1 is spirally shaped, corresponding to the fastening element 32. The spirally shaped fastening element 32 which is shown in black color in Figure 7 is inserted into the spirally shaped notch 31. The end cap 5 is provided with a thread 33 corresponding to the spirally shaped fastening element 32. During assembly, the end cap 5 is screwed onto the fastening element 32 to the desired position. By screwing the end cap 5 onto the fastening element 32, the end cap 5 is fixed in axial direction by the fastening element 32, i.e. the end cap 5 cannot be displaced in an axial direction.

A means for protection against twisting may be used for the end cap 5, for example an anti-torque pin 25. The anti-torque pin is inserted into a groove provided at one position of the outer circumference of the basepipe. A bore 19 may be provided for assembly of the end cap 5 on the basepipe 1, at some positions at the outer circumference of the end cap 5. The bore 19 may be used for a fastening tool such as a hook spanner.

The filter element 3 may be pushed over the basepipe 1 next to the end cap 5.

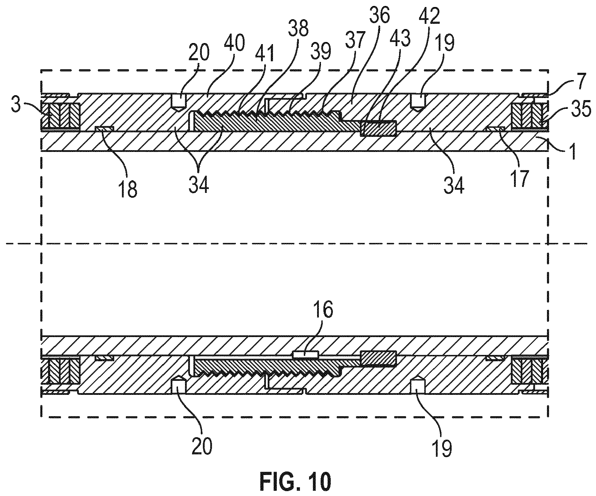

Figures 8 to 10 show a separating device of the present disclosure according to a sixth embodiment. Figure 8 schematically shows the overall view and Figure 9 shows the cross-sectional view. Figure 10 shows a detail of the cross-sectional view of Figure 9 representing the middle section of the separating device.

The separating device of this embodiment comprises two tubular-shaped filter elements, a first filter element 3 and a second filter element 35 (see Figure 9). The tubular-shaped filter elements of this embodiment each is a concentric stack of at least three annular discs. The stack of annular discs may comprise for example 80 annular discs. The annular discs have spacers on their upper side or underside defining a separating gap between two individual annular discs.

The separating device comprises a basepipe 1 which is located inside the filter elements 3, 35 (see Figures 8 and 9). The basepipe 1 is co-centric with the filter elements 3, 35.

Threads 2 are usually cut at both ends of the basepipe 1 (see Figures 8 and 9) and can be used for screwing the basepipes together into long strings.

The basepipe 1 is perforated, i.e. provided with holes, in the region of the filter elements 3, 35; it is not perforated outside the region of the filter elements. The perforation 4 serves the purpose of directing the filtered fluid, i.e. the fluid flow freed of the solid particles, such as for example gas, oil or mixtures thereof, into the interior of the basepipe, from where it can be transported or pumped away.

The separating device comprises an end cap 5 at the upper end and an end cap 6 at the lower end of the separating device (see Figure 8). The end caps are co-centric with the basepipe 1. The end caps 5, 6 at the upper and lower end of the separating device may be designed according to any one of the embodiments described above as shown in Figures 3 - 7.

Between the two filter elements 3, 35, i.e. between the two stacks of annular discs, there is an end cap 34 which fixes both of the two filter elements on the basepipe. The end cap 34 between the two filter elements 3, 35 can also be referred to as intermediate part. The intermediate part 34 is a both-side acting fixing element for the two filter elements 3, 35. The intermediate part 34 has basically the same function as the end cap 5, 6, that is to fix the filter element on the basepipe. The intermediate part has the function of an end cap of one end, for example of the lower end, of the first filter element, and the intermediate part has also the function of an end cap of one end, for example of the upper end of the second filter element. Such an intermediate part may be used if the separating device comprises more than one filter element. It would also be possible to use two separate end caps instead of an intermediate part 34, whereas by using an intermediate part the overall construction is shorter.

The intermediate part 34 is composed of three components. The intermediate part comprises (see Figure 10) a first component 36 having a thread 37 at an inner circumference. The intermediate part further comprises a second component 38 having a thread 39 at the outer circumference. The intermediate part further comprises a third component 40 having a thread 41 at an inner circumference. The fastening element 42 is inserted into the notch 43 which is provided at the outer circumference of the basepipe 1. The fastening element 42 may be a segmented ring, for example such as shown in Figures 11A - 11C or 12A - 12C, or a slotted ring, for example such as shown in Figures 13A - 13C. During assembly, the second component 38 of the intermediate part is screwed into the thread 37 of the first component 36 of the intermediate part. The first and second component 36, 38 are screwed against the stop which is given by the fastening element 42. By screwing the first and second component of the intermediate part against the stop which is given by the fastening element, the intermediate part is fixed in axial direction by the fastening element, i.e. the intermediate part cannot be displaced in an axial direction.

The third component 40 of the intermediate part 34 is screwed onto the thread 39 of the second component 38. The third component 40 does not have to be screwed until a stop and is adjustable in axial direction by screwing the third component 40 onto the thread 39 of the second component 38. The third component 40 may serve for applying a pre-load onto the filter element 3. By screwing the third component onto the thread of the second component, the third component can be adjusted in axial direction.

A means for protection against twisting may be used for the second component 38 of the intermediate part, for example a feather key 16. The feather key is inserted into a key groove provided at one position of the outer circumference of the basepipe. For assembly of the first 36 and third component 40 of the intermediate part, a mounting tape 17, 18 may be used, such as a PTFE tape. Bores 19, 20 may be provided for assembly of the first 36 and third component 40 of the intermediate part on the basepipe, at some positions at the outer circumference of the first 36 and third component 40. The bores 19, 20 may be used for a fastening tool such as a hook spanner.

To protect the filter element, specifically the annular discs, from mechanical damage during handling and deployment into the borehole, the filter element may be surrounded by a tubular shroud 7 (see Figures 1 and 8) that can be freely passed through by a flow. This shroud may be made of a tubular-shaped punched plate. The shroud may be produced from a metallic material, such as from steel, particularly from corrosion-resistant steel. The shroud may be produced from the same material as that used for producing the basepipe.

The end cap must not be displaced in an axial direction on the basepipe during deployment and service of the separating device. For a separating device having a basepipe with an outer diameter of 5 inches and an end cap according to Figure 3, with a first component of the end cap 8, a second component of the end cap 10, a fastening element 14 and a third component of the end cap 12, a push-off test was carried out to determine the push-off force which the end cap can withstand. The test showed that the end cap can carry an axial load of up to about 135 metric tons without plastic deformation or axial displacement in both axial directions. The actual push-off force for a specific separating device is of course depending on the dimensions of the end cap and fastening element. The dimensions depend on the specific application.

The filter element 3, 35 (see Figures 2 - 7 and 9 - 10) may comprise a concentric stack of at least three annular discs defining a central annular region along a central axis, each annular disc having first and second opposed major surfaces, wherein the first major surfaces of a first annular disc and a second annular disc each have at least two spacers, and wherein the first major surface of the first annular disc contacts the second major surface of the second annular disc defining a first contact area and a separating gap, and the first major surface of the second annular disc contacts the second major surface of the third annular disc defining a second contact area and a second separating gap. The filter element may further comprise one or more additional annular discs. Each additional annular disc has first and second opposed major surfaces, wherein the first major surface of each additional disc has at least two spacers, and wherein the first major surface of each additional annular disc contacts the second major surface of an adjacent annular disc defining a contact area and a separating gap.

The concentric stack of annular discs can, and typically does, comprise more than 3 annular discs. The number of annular discs in the annular stack can be from 3 to 500, but also larger numbers of annular discs are possible. For example, the annular stack can comprise 50, 100, 250 or more annular discs.

The first major surface of the annular discs may have, and typically has, more than two spacers. The first major surface of the annular discs may have at least three spacers, or at least five spacers. For example, the annular discs may have 10, 15, 20 or more spacers. The spacers may be distributed uniformly over the circumference of the individual annular discs.

In one embodiment, the contact area of the spacers of the first major surface of the annular discs is planar, so that the spacers have planiform contact with the second major surface of the adjacent annular disc. The annular discs are stacked in such a way that between the individual discs there is in each case a separating gap for the removal of solid particles.

The removal of the solid particles takes place at the inlet opening of a separating gap, which may be divergent, i.e. opening, in the direction of flow and is formed between two annular discs lying one over the other.

The annular discs have on their first major surface at least two spacers of a defined height, with the aid of which the height of the separating gap (gap width of the filter gap, filter width) is set.

The filter width of the central annular region can be set to values between 10 µm and 5000 µm, preferably to values between 20 µm and 1000 µm and particularly preferably to values between 50 µm and 500 µm.

The outer diameter of the annular discs may be 20 - 250 mm, but outer diameters greater than 250 mm are also possible, as the application demands.

The radial ring width of the annular discs may lie in the range of 8 - 20 mm. These ring widths are suitable for separating devices with basepipe diameters in the range of 2⅜ to 5½ inches.

The axial thickness of the annular discs may be from 3 - 12 mm, more specifically from 4 - 7 mm.

The inside diameter of the annular discs should be greater than the outside diameter of the basepipe. This is necessary for technical reasons relating to flow, and also on account of the differences with regard to the thermal expansion between the metallic basepipe and the material from which the annular discs are made. It has been found to be favorable in this respect that the inside diameter of the annular discs is at least 0.5 mm and at most 10 mm greater than the outside diameter of the basepipe. In particular embodiments, the inside diameter of the annular discs is at least 1.5 mm and at most 5 mm greater than the outside diameter of the basepipe. In the gap between the basepipe and the stack of annular discs, bands that are elastically deformable in the radial direction may be placed which allow centring of the annular discs on the basepipe.

Further embodiments of the individual annular discs and the stack of annular discs are disclosed in US 2011/0220347 A1, US 8,833,447 B2, US 8,662,167 B2 and WO 2016/018821 A1.

Each annular disc may comprise or may be produced from a material independently selected from the group consisting of (i) ceramic materials; (ii) mixed materials having fractions of ceramic or metallic hard materials and a metallic binding phase; and (iii) powder metallurgical materials with hard material phases formed in-situ.

These materials are typically chosen based upon their relative abrasion- and erosion-resistance to solid particles such as sands and other mineral particles and also corrosion-resistance to the extraction media and the media used for maintenance, such as for example acids.

The material which the annular discs comprise can be independently selected from this group of materials, which means that each annular disc could be made from a different material. But for simplicity of design and manufacturing, of course, all annular discs of the separating device could be made from the same material.

The ceramic materials which the annular discs can comprise or from which the annular discs are made can be selected from the group consisting of (i) oxidic ceramic materials; (ii) non-oxidic ceramic materials; (iii) mixed ceramics of oxidic and non-oxidic ceramic materials; (iv) ceramic materials having a secondary phase; and (v) long- and/or short fiber-reinforced ceramic materials.

Examples of oxidic ceramic materials are materials chosen from alumina, zirconia, mullite, spinel and mixed oxides. Examples of non-oxidic ceramic materials are silicon carbide, boron carbide, titianium diboride and silicon nitride. Ceramic hard materials are, for example, carbides and borides. Examples of mixed materials with a metallic binding phase are WC-Co, TiC-Fe and TiB2-FeNiCr. Examples of hard material phases formed in situ are chromium carbides. An example of fiber-reinforced ceramic materials is C/SiC. The material group of fiber-reinforced ceramic materials has the advantage that it leads to still greater internal and external pressure resistance of the separating devices on account of its greater strength in comparison with monolithic ceramic.

The aforementioned materials are distinguished by being harder than the typically occurring hard particles, such as for example sand and rock particles, that is to say the Vickers hardness (HV) or Rockwell hardness (HRC) values of these materials lie above the corresponding values of the surrounding rock. Materials suitable for the annular discs of the separating device according to the present disclosure have HV hardness values greater than 12 GPa, or even greater than 20 GPa.

All these materials are at the same time distinguished by having greater brittleness than typical unhardened steel alloys. In this sense, these materials are referred to herein as "brittle-hard".

Materials suitable for the annular discs of the separating device according to the present disclosure have moduli of elasticity greater than 200 GPa, or even greater than 350 GPa.

Materials with a density of at least 90%, more specifically at least 95%, of the theoretical density may be used, in order to achieve the highest possible hardness values and high abrasion and erosion resistances. Sintered silicon carbide (SSiC) or boron carbide may be used as the material for the annular discs. These materials are not only abrasion-resistant but also corrosion-resistant to the treatment fluids usually used for flushing out the separating device and stimulating the borehole, such as acids, for example HCl, bases, for example NaOH, or else steam.

Particularly suitable are, for example, SSiC materials with a fine-grained microstructure (mean grain size ≤ 5 µm), such as those sold for example under the names 3M™ silicon carbide type F and 3M™ silicon carbide type F plus from 3M Technical Ceramics, Kempten, Germany. Furthermore, however, coarse-grained SSiC materials may also be used, for example with a bimodal microstructure. In one embodiment, 50 to 90% by volume of the grain size distribution consisting of prismatic, platelet-shaped SiC crystallites of a length of from 100 to 1500 µm and 10 to 50% by volume consisting of prismatic, platelet-shaped SiC crystallites of a length of from 5 to less than 100 µm (3M™ silicon carbide type C from 3M Technical Ceramics, Kempten, Germany).

Apart from these single-phase sintered SSiC materials, liquid-phase-sintered silicon carbide (LPS-SiC) can also be used as the material for the annular discs. An example of such a material is 3M™ silicon carbide type T from 3M Technical Ceramics, Kempten, Germany. In the case of LPS-SiC, a mixture of silicon carbide and rare earth metal oxides is used as the starting material. LPS-SiC has a higher bending resistance and greater toughness, measured as a K_{lc} value, than single-phase sintered silicon carbide (SSiC).

The present disclosure also relates to a kit of parts for assembling the separating device as disclosed herein, wherein the kit of parts comprises a tubular-shaped filter element, a perforated pipe, an end cap and a fastening element, and wherein the perforated pipe has a notch at the outer circumference of the upper end of the perforated pipe and/or a notch at the outer circumference of the lower end of the perforated pipe.

The separating device according to the present disclosure may be used for removing solid particles from a fluid. A fluid as used herein means a liquid or a gas or combinations of liquids and gases.

The separating device according to the present disclosure may be used in a process for extracting fluids from extraction wells, specifically in extraction wells in oil and/or gas reservoirs for separating solid particles from volumetric flows of mineral oil and/or natural gas. The separating device may also be used for other separation processes for removing solid particles from fluids outside of extraction wells, processes in which a great abrasion resistance and a long lifetime of the separating device are required, such as for example for filtering processes in mobile and stationary storage installations for fluids or for filtering processes in naturally occurring bodies of water, such as for instance in the filtering of seawater. The separating device disclosed herein can also be used in a process for extracting ores and minerals. In the extraction of ore and many other minerals, there are problems of abrasion and erosion in the removal of solid particles from fluid flows. The separating device according to the present disclosure is particularly suitable for the separation of solid particles from fluids, in particular from mineral oil, natural gas and water, in extraction wells in which high and extremely high rates of flow occur.

## Claims

1. A separating device for removing solid particles from fluids, comprising:
a tubular-shaped filter element (3) having an upper end and a lower end,
a perforated pipe (1) which is co-centric with and located inside the filter element (3),
an end cap (5, 6) at the upper end and an end cap at the lower end of the filter element (3), the end cap being co-centric with the perforated pipe (1),
wherein the end cap (5, 6) at the upper end and/or at the lower end of the filter element (3) is fixed on the perforated pipe (1) in axial direction in a form-fitting manner.

2. The separating device according to claim 1, further comprising:
a fastening element (14, 23, 28, 32) which is co-centric with the perforated pipe (1),
wherein the outer diameter of the fastening element (14, 23, 28, 32) is larger than the outer diameter of the perforated pipe (1),
and wherein the end cap (5, 6) at the upper end and/or at the lower end of the filter element (3) is fixed on the perforated pipe (1) in axial direction in a form-fitting manner by the fastening element (14, 23, 28, 32).

3. The separating device according to claim 2,
wherein the perforated pipe (1) has a notch (15, 29, 31) at the outer circumference of the upper end of the perforated pipe and/or a notch at the outer circumference of the lower end of the perforated pipe,
and wherein the fastening element (14, 23, 28, 32) is inserted into the notch (15, 29, 31) at the upper end and /or at the lower end of the perforated pipe (1).

4. The separating device according to claim 2 or 3, wherein the fastening element is a segmented ring or a slotted ring.

5. The separating device according to claim 3, wherein the fastening element is a spirally shaped element and wherein the notch at the outer circumference of the perforated pipe is spirally shaped.

6. The separating device according to any of claims 2 to 4, wherein the end cap (5) has a thread (9) at an inner circumference, and wherein the fastening element (23) has a thread (24) at the outer circumference, and wherein the end cap (5) is screwed onto the fastening element (23) until the stop which is given by the fastening element (23).

7. The separating device according to any of claims 2 to 4,
wherein the end cap (5, 6) comprises a first component (8) having a thread (9) at an inner circumference,
and wherein the end cap further comprises a second component (10) having a thread (11) at an outer circumference,
and wherein the second component (10) is screwed into the thread (9) of the first component,
and wherein the first and second component (8, 10) are screwed against the stop which is given by the fastening element (14).

8. The separating device according to any of claims 1 to 7, wherein the filter element (3) comprises a concentric stack of at least three annular discs defining a central annular region along a central axis, each annular disc having first and second opposed major surfaces, wherein the first major surfaces of a first annular disc and a second annular disc each have at least two spacers, and wherein the first major surface of the first annular disc contacts the second major surface of the second annular disc defining a first contact area and a separating gap, and the first major surface of the second annular disc contacts the second major surface of the third annular disc defining a second contact area and a second separating gap.

9. The separating device according to claim 8, wherein the filter element (3) further comprises one or more additional annular discs, and wherein each additional annular disc has first and second opposed major surfaces, and wherein the first major surface of each additional disc has at least two spacers, and wherein the first major surface of each additional annular disc contacts the second major surface of an adjacent annular disc defining a contact area and a separating gap.

10. The separating device according to any of claims 7 to 9, wherein the end cap (5, 6) further comprises a third component (12) having a thread (13) at an inner circumference, and wherein the third component (12) is screwed onto the thread (13) of the second component (10).

11. The separating device according to claim 10, wherein the third component (12) is adjustable in axial direction.

12. Kit of parts for assembling the separating device of any of claims 2 to 11, wherein the kit of parts comprises a tubular-shaped filter element, a perforated pipe, an end cap and a fastening element, and wherein the perforated pipe has a notch at the outer circumference of the upper end of the perforated pipe and/or a notch at the outer circumference of the lower end of the perforated pipe.

13. Use of a fastening element as described in any of claims 2 to 11 for fixing an end cap on a perforated pipe in axial direction in a form-fitting manner.

14. Use of the separating device of any of claims 1 to 11 for removing solid particles from fluids
in a process for extracting fluids from extraction wells, or
in water or in storage installations for fluids, or
in a process for extracting ores and minerals.
